# EUROPEAN PATENT SPECIFICATION

(11) **EP 2 366 877 B1**
(45) Date of publication and mention of the grant of the patent: **04.12.2013**
(21) Application number: 10186988.1
(22) Date of filing: 08.10.2010
(51) Int. Cl.: F01N 3/021, F01N 11/00, F01N 13/00, G01N 15/06

(54) **Sensor for exhaust gas purifying apparatus**
Sensor für eine Abgasreinigungsvorrichtung
Capteur pour appareil de purification de gaz d'échappement

(30) Priority: 16.03.2010 WO PCT/JP2010/054459
(43) Date of publication of application: 21.09.2011
(73) Proprietor: Ibiden Co., Ltd., Gifu 503-8604 (JP)
(72) Inventor: Miyata, Fumishige, Gifu 501-0695 (JP); Kasuga, Takafumi, Gifu 501-0695 (JP); Negawa, Akihiro, Gifu 501-0695 (JP)
(74) Representative: HOFFMANN EITLE

(56) References cited:
- EP-A1- 1 914 399
- EP-A1- 1 916 394

## Description

### BACKGROUND OF THE INVENTION

### 1. Field of the Invention

The present invention relates to sensors for exhaust gas purifying apparatuses, and more particularly to the structure of a sensor for an exhaust gas purifying apparatus with an examining filter provided in a secondary exhaust line diverging from the primary exhaust line of an internal combustion engine.

### 2. Description of the Related Art

Conventionally, an exhaust gas purifying apparatus is known that uses a diesel particulate filter (DPF) formed of porous ceramic to trap particulate matter (PM) primarily of C (carbon) emitted from a diesel engine. In this exhaust gas purifying apparatus, the PM is gradually deposited in the DPF with continuous use of the diesel engine. Therefore, it is possible to prevent the PM from being discharged from the diesel engine side to the atmosphere, and it is possible to purify exhaust gas.

Here, the generation of a crack in the DPF during regeneration of the DPF may cause a leak of the PM into an exhaust line on the downstream side of the DPF. In preventing a crack of the DPF, it is effective to burn the PM in the DPF with proper timing, thereby oxidizing and removing the PM. Therefore, in order to measure the amount of PM deposition in the DPF, a secondary exhaust line may be provided that connects to the exhaust line on the upstream side of the DPF to take in part of the exhaust gas emitted from the internal combustion engine as a sample, and an examining filter (detecting filter) may be provided on the secondary exhaust line. (See, for example, Patent Document 1.)

Such a conventional PM sensor of Patent Document 1 is capable of estimating the amount of PM deposition in the DPF by measuring a difference in pressure across the examining filter in the secondary exhaust line or the like and determining the amount of PM of the secondary exhaust line. Further, it is possible to determine the presence of a PM leak or to determine the amount of PM deposition in the DPF by providing an examining filter in the exhaust line on the downstream side of the DPF.
[Patent Document 1] EP 1916394 A1

In the conventional PM sensor described in Patent Document 1, the examining filter provided in the secondary exhaust line has a tubular shape extending in the secondary exhaust line. In the case of use for a long period of time, however, an excessive stress is exerted on the examining filter because of vibrations or the like so that the examining filter may be damaged unless the examining filter is properly held. On the other hand, the examining filter is less likely to be damaged with an increase in the area of the held part of the examining filter because the holding of the examining filter becomes more stable. In this case, however, the PM amount of the secondary exhaust line or the PM concentration in exhaust gas may not be measured with accuracy because of a decrease in the area of the examining filter exposed to the exhaust gas.

### SUMMARY OF THE INVENTION

The present invention is made in view of the above, and has an object of providing a sensor for an exhaust gas purifying apparatus that holds an examining filter with reduced applied stress while properly measuring the PM amount or the PM concentration.

The above object of the invention is achieved by a sensor for an exhaust gas purifying apparatus including an examining filter provided in a secondary exhaust line diverging from a primary exhaust line of an internal combustion engine; and a holding member configured to hold the examining filter on the secondary exhaust line, wherein the holding member holds a 10% to 50% part by area of a peripheral portion of the examining filter so as to cover the part from a peripheral side of the examining filter.

In this aspect of the invention, the holding member holds a 10% to 50% part by area of the peripheral portion of the examining filter so as to cover the part from a peripheral side of the examining filter. According to this structure of the examining filter, it is possible for the examining filter to be properly held while ensuring a somewhat large filter area as a filter. Therefore, according to the present invention, it is possible to reduce application of stress on the examining filter while properly measuring the amount of PM or the concentration of PM.

In the above-described sensor for an exhaust gas purifying apparatus, the peripheral portion of the examining filter may be used as a filter wall.

Further, in the above-described exhaust gas purifying sensor, the examining filter may be held in the secondary exhaust line with a peripheral surface of the examining filter being covered with the holding member.

Further, in the above-described sensor for an exhaust gas purifying apparatus, the examining filter may include a sealing part facing an inflow side of the secondary exhaust line, and be held by the holding member on an outflow side of the secondary exhaust line.

Further, in the above-described sensor for an exhaust gas purifying apparatus, the examining filter may include a sealing part facing an outflow side of the secondary exhaust line, and be held by the holding member on an inflow side of the secondary exhaust line.

Further, the above-described sensor for an exhaust gas purifying apparatus may include a coating for preventing a deposition of particulate matter in the secondary exhaust line, the coating being applied on a part of the examining filter, the part being held by the holding member.

Further, in the above-described sensor for an exhaust gas purifying apparatus, the examining filter may be provided for determining a presence of a leak of particulate matter from a diesel particulate filter capable of trapping the particulate matter or for measuring an amount of the particulate matter trapped by the diesel particulate filter.

According to a sensor for an exhaust gas purifying apparatus according to an aspect of the present invention, it is possible to hold an examining filter with reduced applied stress while properly measuring the PM amount or the PM concentration.

### BRIEF DESCRIPTION OF THE DRAWINGS

FIG. 1 is a diagram illustrating an overall configuration of an exhaust gas purifying apparatus having a sensor for an exhaust gas purifying apparatus according to an embodiment of the present invention;
FIG. 2 is a diagram illustrating part of the sensor for the exhaust gas purifying apparatus according to the embodiment of the present invention;
FIG. 3 is a diagram illustrating a sensor for an exhaust gas purifying apparatus according to a variation of the embodiment of the present invention; and
FIG. 4 is a diagram illustrating an overall configuration of an exhaust gas purifying apparatus having a sensor for an exhaust gas purifying apparatus according to a variation of the embodiment of the present invention.

### DETAILED DESCRIPTION OF THE PREFERRED EMBODIMENTS

A description is given below, using the drawings, of a sensor for an exhaust gas purifying apparatus according to an embodiment of the present invention.

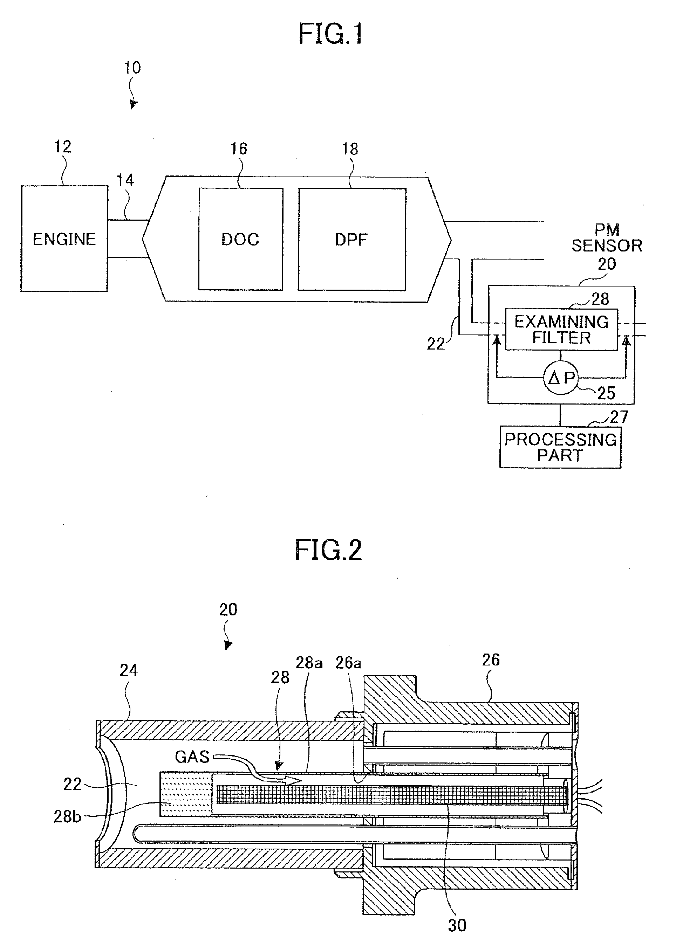

FIG. 1 is a diagram illustrating an overall configuration of an exhaust gas purifying apparatus having a sensor for an exhaust gas purifying apparatus according to an embodiment of the present invention. FIG. 2 is a diagram illustrating part of the sensor for an exhaust gas purifying apparatus according to the embodiment of the present invention.

As illustrated in FIG. 1, an exhaust gas purifying apparatus 10 of this embodiment includes a diesel oxidation catalyst (DOC) 16 and a diesel particulate filter (DPF) 18, which are provided on a primary exhaust line 14 connected to an internal combustion engine (a diesel engine in particular) 12. The DOC 16 is a catalyst for removing (converting) carbon monoxide, hydrocarbons and the like included in the exhaust gas emitted from the internal combustion engine 12. Further, the DPF 18 is a filter that traps particulate matter (PM) included in the exhaust gas emitted from the internal combustion engine 12.

The exhaust gas purifying apparatus 10 is an apparatus for purifying the exhaust gas emitted from the internal combustion engine 12 to the atmosphere. Further, if a failure such as breakage occurs in the DPF 18 to cause more PM than or the same amount of PM as a threshold to leak into the primary exhaust line 14 on the downstream side of the DPF 18, the exhaust gas purifying apparatus 10 is capable of detecting this failure so as to give the alarm, flash a lamp, turn on the lamp, etc. The exhaust gas purifying apparatus 10 includes a sensor for an exhaust gas purifying apparatus (hereinafter referred to as "PM sensor") 20 for detecting a failure of the DPF 18.

That is, a secondary exhaust line 22, which is provided separately from the primary exhaust line 14 communicating with the atmosphere, is connected to the primary exhaust line 14 on the downstream side of the DPF 18. The secondary exhaust line 22 diverges from the primary exhaust line 14 so as to allow inflow of part of the exhaust gas that has passed through the DPF 18. The secondary exhaust line 22 has a flow passage cross-sectional area smaller than the flow passage cross-sectional area of the primary exhaust line 14. The PM sensor 20 is provided in the secondary exhaust line 22, and determines the presence of a leak of PM from the DPF 18 based on the concentration of PM in the exhaust gas flowing through the secondary exhaust line 22.

Referring to FIG. 2, the PM sensor 20 includes an examining filter 28 provided in the secondary exhaust line 22. The PM sensor 20 may further include a differential pressure gauge, a flowmeter, and/or a temperature measuring part. Part of the exhaust gas that has passed through the DPF 18 in the primary exhaust line 14 is drawn by suction with a pump or the like to the side of the secondary exhaust line 22 to pass through the examining filter 28.

The examining filter 28, which is a filter for calculating the amount of PM deposited in the secondary exhaust line 22 or the concentration of PM included in the exhaust gas emitted from the internal combustion engine 12, is capable of trapping PM. The examining filter 28 is formed of a material such as porous ceramic like that of the DPF 18, and has a tubular shape such as a cylindrical shape or a shape other than the tubular shape (for example, a shape having one quadrangular cell, a shape having cells such as 3 x 3 cells, etc.). The examining filter 28 has a soot storage capacity smaller than the soot storage capacity of the DPF 18. The examining filter 28 has a peripheral portion 28a used (serviceable) as a filter wall.

The PM sensor 20 includes a differential pressure gauge 25. The differential pressure gauge 25 is a device that outputs an electrical signal corresponding to a differential pressure "ΔP" between the inlet and the outlet (that is, a difference in pressure between the upstream side and the downstream side) of the examining filter 28 in the secondary exhaust line 22, and may be formed of a known pressure gauge such as a diaphragm, gauge-type, bellows, or thermal pressure gauge. The output of the differential pressure gauge 25 is fed to a processing part 27 including a microcomputer. The processing part 27 detects the pressure difference "ΔP" caused between the upstream side and the downstream side of the examining filter 28 in the secondary exhaust line 22 based on the output signal of the differential pressure gauge 25 or the like, and measures the concentration of PM in the exhaust gas based on a change over time in the pressure difference "ΔP."

Part of the secondary exhaust line 22 is formed of a cylindrical outer casing (canister) 24 forming at least part of a pipe that introduces exhaust gas flowing in from the primary exhaust line 14 to the side of the examining filter 28. The canister 24 is fixed to the primary exhaust line 14 with a cylindrical jig 26 (holding member). The canister 24 is formed of a member having high strength, such as stainless steel, and is attached to the cylindrical jig 26 by welding or the like. The examining filter 28 is fixed to the cylindrical jig 26 and the canister 24 with a mat, ceramic paste or the like.

The canister 24 surrounds the axially-extending cylindrical examining filter 28, and leads exhaust gas flowing in from the primary exhaust line 14 to the examining filter 28. The end portion of the examining filter 28 on the exhaust gas inflow side projects toward the exhaust gas inflow side from the cylindrical jig 26 inside the canister 24. The exhaust gas inflow side of the examining filter 28 is sealed with a sealing part 28b, and part of the peripheral portion 28a of the examining filter 28 is exposed as a filter portion inside the canister 24. Therefore, the exhaust gas introduced to the examining filter 28 in the secondary exhaust line 22 flows from the peripheral side (outside) to the inside of the examining filter 28 through the filter portion. At this point, PM included in the exhaust gas is deposited on the peripheral side of the examining filter 28.

A heater 30 is provided inside the examining filter 28. The heater 30, which is a heating wire, a sheathed heater, a ceramic heater, etc., rises in temperature with a supply of electric power from a battery mounted in a vehicle or the like having the internal combustion engine 12. The heater 30 heats the entire examining filter 28 up to a predetermined temperature (for example, 600 °C), thereby burning the PM deposited on the exterior wall of the examining filter 28 to regenerate the examining filter 28. It is desirable that the supply of electric power to the heater 30 be controlled based on the result of detection of the pressure difference "ΔP" in the secondary exhaust line 22 by the processing part 27.

Next, a description is given of operations of the exhaust gas purifying apparatus 10 (the sensor for an exhaust gas purifying apparatus 20) according to this embodiment.

In this embodiment, the exhaust gas emitted from the internal combustion engine 12 flows through the primary exhaust line 14 to pass through the DPF 18. Thereafter, most of the exhaust gas is discharged to the atmosphere, while part of the exhaust gas flows into the secondary exhaust line 22 to be introduced into the PM sensor 20. PM included in the exhaust gas introduced into the PM sensor 20 is adsorbed by and is deposited on the filter portion of the examining filter 28 when passing through the filter portion. A change over time in the state of PM deposition in the examining filter 28 results in a change over time in the pressure difference "ΔP" across the examining filter 28 in the secondary exhaust line 22.

The processing part 27 detects the pressure difference "ΔP" caused between the upstream side and the downstream side of the examining filter 28 in the secondary exhaust line 22 based on the output signal of the differential pressure gauge 25 of the PM sensor 20. The processing part 27 calculates the amount of PM deposited in the examining filter 28 or the concentration of PM in the exhaust gas flowing through the secondary exhaust line 22 based on the pressure difference "ΔP," a flow rate, and temperature, and determines the presence or absence of a leak of PM from the DPF 18 based on the calculated amount or concentration of PM. If it is determined as a result of the determination that there is a leak of PM from the DPF 18, the processing part 27 causes an alarm to be given, a lamp to flash or turn on, etc. Accordingly, it is possible to determine the presence or absence of a failure of the DPF 18 by measuring the PM concentration on the downstream side of the DPF 18 and to notify the driver of a vehicle or the like including the exhaust gas purifying apparatus 10 of the failure when the presence of a failure is determined.

The processing part 27 also determines whether the amount of PM deposited in the examining filter 28, which is calculable, is more than or equal to a predetermined threshold. This predetermined threshold is set equal to the minimum of the amount of PM deposition that requires regeneration of the examining filter 28. If it is determined that the amount of PM deposition is more than or equal to the predetermined threshold, the processing part 27 causes electric power to be supplied from a battery to the heater 30 to heat the examining filter 28.

When the heater 30 is put into operation so that the examining filter 28 is heated, the PM deposited in the examining filter 28 is burned so that the examining filter 28 is regenerated. Accordingly, even if PM is excessively deposited in the examining filter 28, it is possible to regenerate the examining filter 28 by causing the deposited PM to be burned by the action of the heater 30.

Thus, according to this embodiment, the examining filter 28 is used in determining the presence or absence of a failure of the DPF 18 by measuring the PM concentration on the downstream side of the DPF 18. This examining filter 28 is provided in the secondary exhaust line 22, into which part of the exhaust gas passing through the DPF 18 is introduced, and is cylindrically formed inside the canister 24. Failure to properly hold the examining filter 28 would cause an excessive stress due to vibrations or the like to be exerted on and damage the examining filter 28 in the case of use for a long period of time. On the other hand, as the area of a part of the examining filter 28 by which the examining filter 28 is held increases, the examining filter 28 is held more stably, thus reducing the likelihood of the occurrence of damage to the examining filter 28. In this case, however, the area of the examining filter 28 exposed to exhaust gas is reduced. Accordingly, the concentration of PM in the exhaust gas would not be measured with accuracy.

According to this embodiment, the cylindrical jig 26 has a through hole 26a provided to be open in the axial directions so as to hold the examining filter 28. The examining filter 28 is held by the cylindrical jig 26 through the through hole 26a. As described above, the cylindrical jig 26 fixes the canister 24 to the primary exhaust line 14, and holds the examining filter 28 with the filter portion of the examining filter 28 being exposed inside the canister 24.

To hold the examining filter 28 extending cylindrically in axial directions, the cylindrical jig 26 covers a 10% to 50% part by (exterior surface) area (specifically, relative to the total filter area of the peripheral surface of the filter wall) of the peripheral portion 28a of the examining filter 28 from its peripheral side. That is, the area of the part of the examining filter 28 held by the cylindrical jig 26 is 10% to 50% of the (exterior surface) area of the peripheral portion 28a of the examining filter 28. This is because if the area of the held part is less than 10%, the examining filter 28 may be damaged by an excessive stress due to vibrations or the like, and if the area of the held part exceeds 50%, the PM concentration may not be measured with accuracy.

In this case, the examining filter 28 has the sealing part 28b facing the exhaust gas inflow side, and is held by the cylindrical jig 26 on the exhaust gas outflow side. In the peripheral portion 28a, an exhaust-gas-inflow-side region on the front-end side (upstream side) of the region covered with the cylindrical jig 26 is used as the filter portion to trap PM in the exhaust gas. Therefore, the examining filter 28 is properly held while ensuring a somewhat large filter area as a filter.

In the PM sensor 20 of this exhaust gas purifying apparatus 10, it is ensured that the examining filter 28 has a somewhat larger filter area, so that it is possible to properly measure the concentration of PM in exhaust gas. Further, since the examining filter 28 is held stably with the cylindrical jig 26, it is possible to prevent an excessive stress due to vibrations or the like from being applied to the examining filter 28. Therefore, according to the PM sensor 20 of the exhaust gas purifying apparatus 10 of this embodiment, it is possible to properly measure the concentration of PM in exhaust gas while preventing breakage of the examining filter 28.

A description is given above of a preferred embodiment of the present invention. The present invention, however, is not limited to the specifically disclosed embodiment, and variations and modifications may be made without departing from the scope of the present invention.

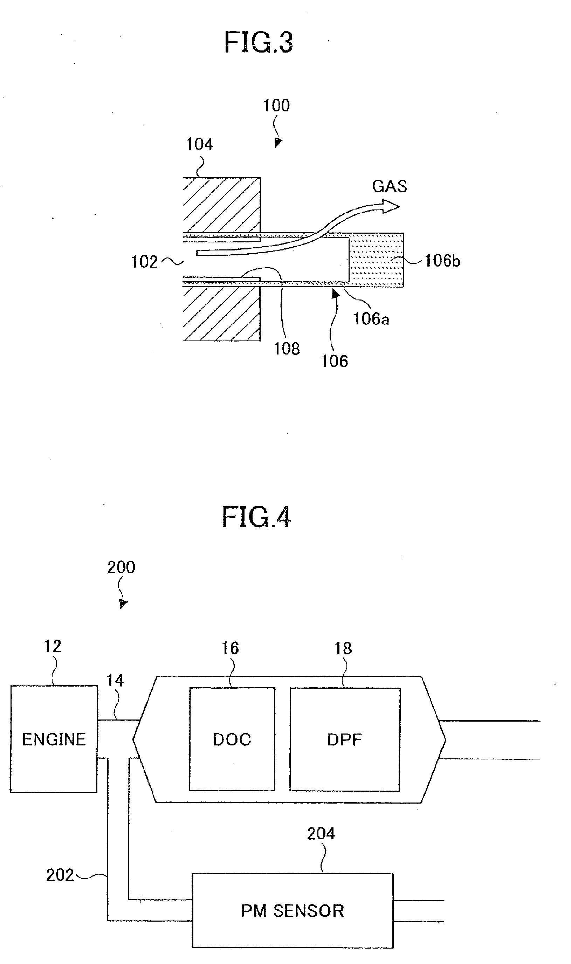

For instance, the above-described embodiment of the present invention is the example of the PM sensor 20 having the examining filter 28 provided in the secondary exhaust line 22 connecting to the downstream side of the DPF 18, the examining filter 28 having an end portion projecting toward the exhaust gas inflow side (inlet side) inside the canister 24 and being sealed with the sealing part 28b on the exhaust gas inflow side. FIG. 3 is a diagram illustrating a sensor for an exhaust gas purifying apparatus according to a variation of the embodiment of the present invention. Alternatively, as illustrated in FIG. 3, the present invention may also be applied to a PM sensor 100 having an examining filter 106 provided in a secondary exhaust line 102 connecting to the downstream side of the DPF 18, the examining filter 106 having an end portion projecting toward the exhaust gas outflow side (outlet side) inside the canister 24 and being sealed with a sealing part 106b on the exhaust gas outflow side.

In the PM sensor 100 according to this variation of the embodiment of the present invention, the examining filter 106 has the sealing part 106b facing the exhaust gas outflow side, and is held by a holding member 104 on the exhaust gas inflow side. In a peripheral portion 106a of the examining filter 106, an exhaust-gas-outflow-side region on the rear-end side (downstream side) of the region covered with the holding member 104 is used as a filter portion to trap PM in exhaust gas.

To hold the examining filter 106 extending cylindrically in axial directions, the holding member 104 covers a 10% to 50% part by (exterior surface) area (specifically, relative to the total filter area of the peripheral surface of the filter wall) of the peripheral portion 106a of the examining filter 106 from its peripheral side. That is, the area of the part of the examining filter 106 held by the holding member 104 is 10% to 50% of the (exterior surface) area of the peripheral portion 106a of the examining filter 106. This is because if the area of the held part is less than 10%, the examining filter 106 may be damaged by an excessive stress due to vibrations or the like, and if the area of the held part exceeds 50%, the PM concentration may not be measured with accuracy.

Therefore, the examining filter 106 is properly held while ensuring a somewhat large filter area as a filter. Accordingly, it is possible to have the same effects as those of the above-described embodiment.

In this variation of the embodiment of the present invention, the examining filter 106 is held by the holding member 104 on the exhaust gas inflow side, and exhaust gas flows from the inside to the peripheral side (outside) of the examining filter 106 through its filter portion. According to this filter structure, PM in the exhaust gas may be deposited on the interior side of the examining filter 106 where the examining filter 106 faces (is held by) the holding member 104. Accordingly, it is desirable to apply a coating 108 on the interior side of the part of the examining filter 106 held by the holding member 104 in order to prevent the deposition of PM on the interior side. Examples of the coating 108 include alumina, glass, etc. According to this variation of the embodiment of the present invention, the presence of the coating 108 makes it possible to prevent the deposition of PM on the interior side of the examining filter 106 where the examining filter 106 faces the holding member 104. Accordingly, it is possible to prevent a flow of exhaust gas passing through the examining filter 106 from being blocked by deposition of PM on the interior surface of the examining filter 106.

The above-described embodiment is the system of the exhaust gas purifying apparatus 10, where the secondary exhaust line 22 is provided to connect to the primary exhaust line 14 on the downstream side of the DPF 18, thereby determining the presence of a leak of PM from the DPF 18. However, the present invention is not limited to this. FIG. 4 is a diagram illustrating an overall configuration of an exhaust gas purifying apparatus having a sensor for an exhaust gas purifying apparatus according to a variation of the embodiment of the present invention. The exhaust gas purifying apparatus 10 may also be applied to the system of an exhaust gas purifying apparatus 200 as illustrated in FIG. 4, where a secondary exhaust line 202 is provided to connect to the primary exhaust line 14 on the upstream side of the DPF 18 and a PM sensor 204 is provided in the secondary exhaust line 202, thereby measuring the concentration of PM in exhaust gas flowing through the primary exhaust line 14. In this case, it is desirable that the upstream side of the secondary exhaust line 202 be connected to the primary exhaust line 14 on the upstream side of the DPF 18 and that the downstream side of the secondary exhaust line 202 be connected to the primary exhaust line 14 on the downstream side of the DPF 18.

In this variation of the embodiment of the present invention as well, the same as in the above-described embodiment, the PM sensor 204 includes an examining filter that has a sealing part facing the exhaust gas inflow side and is held by a holding member on the exhaust gas outflow side, and in the peripheral portion of the examining filter, an exhaust-gas-inflow-side region on the front-end side (upstream side) of the region covered with the holding member is used as a filter portion to trap PM in exhaust gas. To hold the examining filter extending cylindrically in axial directions, the holding member covers a 10% to 50% part by (exterior surface) area (specifically, relative to the total filter area of the peripheral surface of the filter wall) of the peripheral portion of the examining filter from its peripheral side. Therefore, according to this filter structure as well, the examining filter is properly held while ensuring a somewhat large filter area as a filter. Accordingly, it is possible to have the same effects as those of the above-described embodiment.

Alternatively, the examining filter of the PM sensor 204 may have a sealing part facing the exhaust gas outflow side and be held by the holding member on the exhaust gas inflow side, and in the peripheral portion of the examining filter, an exhaust-gas-outflow-side region on the rear-end side (downstream side) of the region covered with the holding member may be used as a filter portion to trap PM in exhaust gas. According to this filter structure as well, it is possible to have the same effects as those of the above-described embodiment.

## Claims

1. A sensor (20) for an exhaust gas purifying apparatus including an examining filter (28) provided in a secondary exhaust line (22) diverging from a primary exhaust line (14) of an internal combustion engine (12); and a holding member (26) configured to hold the examining filter (28) on the secondary exhaust line (22) **characterized in that**:
the holding member (26) covers a 10% to 50% part by area of a peripheral portion of the examining filter (28) so as to cover the part from a peripheral side of the examining filter (28).

2. The sensor for an exhaust gas purifying apparatus as claimed in claim 1, **characterized in that** the peripheral portion of the examining filter is used as a filter wall.

3. The sensor for an exhaust gas purifying apparatus as claimed in claim 1, **characterized in that** the examining filter is held in the secondary exhaust line with a peripheral surface of the examining filter being covered with the holding member.

4. The sensor for an exhaust gas purifying apparatus as claimed in any of claims 1 to 3, **characterized in that** the examining filter includes a sealing part facing an inflow side of the secondary exhaust line, and is held by the holding member on an outflow side of the secondary exhaust line.

5. The sensor for an exhaust gas purifying apparatus as claimed in any of claims 1 to 3, **characterized in that** the examining filter includes a sealing part facing an outflow side of the secondary exhaust line, and is held by the holding member on an inflow side of the secondary exhaust line.

6. The sensor for an exhaust gas purifying apparatus as claimed in claim 5, **characterized by**:
a coating for preventing a deposition of particulate matter in the secondary exhaust line, the coating being applied on a part of the examining filter, the part being held by the holding member.

7. The sensor for an exhaust gas purifying apparatus as claimed in any of claims 1 to 6, **characterized in that** the examining filter is provided for determining a presence of a leak of particulate matter from a diesel particulate filter capable of trapping the particulate matter or for measuring an amount of the particulate matter trapped by the diesel particulate filter.

## Patentansprüche

1. Sensor (20) für eine Abgasreinigungsvorrichtung mit einem Prüffilter (28), der in einer sekundären Abgasleitung (22) vorgesehen ist, die von einer primären Abgasleitung (14) eines Verbrennungsmotors (12) abzweigt; und einem Halteelement (26), das gestaltet ist, den Prüffilter (28) an der sekundären Abgasleitung (22) zu halten, **dadurch gekennzeichnet, dass**:
das Halteelement (26) einen Flächenteil von 10% bis 50% eines Randabschnitts des Prüffilters (28) bedeckt, so dass der Teil von einer Randseite des Prüffilters (28) bedeckt ist.

2. Sensor für eine Abgasreinigungsvorrichtung nach Anspruch 1, **dadurch gekennzeichnet, dass** der Randabschnitt des Prüffilters als Filterwand verwendet wird.

3. Sensor für eine Abgasreinigungsvorrichtung nach Anspruch 1, **dadurch gekennzeichnet, dass** der Prüffilter in der sekundären Abgasleitung gehalten ist, wobei eine Randoberfläche des Prüffilters mit dem Halteelement bedeckt ist.

4. Sensor für eine Abgasreinigungsvorrichtung nach einem der Ansprüche 1 bis 3, **dadurch gekennzeichnet, dass** der Prüffilter ein Dichtungsteil aufweist, das zu einer Einflussseite der sekundären Abgasleitung zeigt, und durch das Halteelement an einer Ausflussseite der sekundären Abgasleitung gehalten ist.

5. Sensor für eine Abgasreinigungsvorrichtung nach einem der Ansprüche 1 bis 3, **dadurch gekennzeichnet, dass** der Prüffilter ein Dichtungsteil aufweist, das zu einer Ausflussseite der sekundären Abgasleitung zeigt, und durch das Halteelement an einer Einflussseite der sekundären Abgasleitung gehalten ist.

6. Sensor für eine Abgasreinigungsvorrichtung nach Anspruch 5, **gekennzeichnet durch**:
eine Beschichtung zum Verhindern einer Ablagerung von Partikeln in der sekundären Abgasleitung, wobei die Beschichtung geeignet ist, auf einen Teil des Prüffilters aufgebracht zu werden, wobei der Teil **durch** das Halteelement gehalten ist.

7. Sensor für eine Abgasreinigungsvorrichtung nach einem der Ansprüche 1 bis 6, **dadurch gekennzeichnet, dass** der Prüffilter zum Bestimmen des Vorliegens eines Lecks von Partikeln von einem Dieselpartikelfilter, der im Stande ist, Partikel zu fangen, oder zum Messen einer Menge der Partikel vorgesehen ist, die durch den Dieselteilchenfilter gefangen sind.

## Revendications

1. Capteur (20) pour un appareil de purification de gaz d'échappement incluant un filtre d'examen (28) disposé dans une conduite d'échappement secondaire (22) s'écartant à partir d'une conduite d'échappement primaire (14) d'un moteur à combustion interne (12) ; et un élément de maintien (26) configuré pour maintenir le filtre d'examen (28) sur la conduite d'échappement secondaire (22), **caractérisé en ce que** :
l'élément de maintien (26) couvre une fraction de 10 % à 50 % en surface d'une partie périphérique du filtre d'examen (28), de manière à couvrir la partie provenant d'un côté périphérique du filtre d'examen (28).

2. Capteur pour un appareil de purification de gaz d'échappement tel que revendiqué dans la revendication 1, **caractérisé en ce que** la partie périphérique du filtre d'examen est utilisée en tant qu'une paroi de filtre.

3. Capteur pour un appareil de purification de gaz d'échappement tel que revendiqué dans la revendication 1, **caractérisé en ce que** le filtre d'examen est maintenu sur la conduite d'échappement secondaire, avec une surface périphérique du filtre d'examen étant recouverte par l'élément de maintien.

4. Capteur pour un appareil de purification de gaz d'échappement tel que revendiqué dans l'une quelconque des revendications 1 à 3, **caractérisé en ce que** le filtre d'examen inclut une partie d'étanchéité faisant face à un côté d'entrée de flux de la conduite d'échappement secondaire, et est maintenu par l'élément de maintien d'un côté de sortie de flux de la conduite d'échappement secondaire.

5. Capteur pour un appareil de purification de gaz d'échappement tel que revendiqué dans l'une quelconque des revendications 1 à 3, **caractérisé en ce que** le filtre d'examen inclut une partie d'étanchéité faisant face à un côté de sortie de flux de la conduite d'échappement secondaire, et est maintenu par l'élément de maintien d'un côté d'entrée de flux de la conduite d'échappement secondaire.

6. Capteur pour un appareil de purification de gaz d'échappement tel que revendiqué dans la revendication 5, **caractérisé par** :
un revêtement pour empêcher un dépôt de matière particulaire dans la conduite d'échappement secondaire, le revêtement étant appliqué sur une partie du filtre d'examen, la partie étant maintenue par l'élément de maintien.

7. Capteur pour un appareil de purification de gaz d'échappement tel que revendiqué dans l'une quelconque des revendications 1 à 6, **caractérisé en ce que** le filtre d'examen est disposé pour déterminer une présence d'une fuite de matière particulaire à partir d'un filtre à particules diesel capable de piéger la matière particulaire ou pour mesurer une quantité de matière particulaire piégée par le filtre à particules diesel.
